# FASCICULE DE BREVET EUROPEEN

(11) **EP 0 436 415 B1**
(45) Date de publication et mention de la délivrance du brevet: **15.02.1995**
(21) Numéro de dépôt: 90403441.0
(22) Date de dépôt: 04.12.1990
(51) Int. Cl.: B29C 53/02, B29C 53/08, B29C 57/06

(54) **Procédé de formage de pièces profilées convexes non développables en matériau composite**
Formgebungsverfahren für konvexe, nicht entfaltbare Profilteile aus Verbundwerkstoff
Method for shaping convex inextensible profiles made of composite material

(30) Priorité: 05.12.1989 FR 8916058
(43) Date de publication de la demande: 10.07.1991
(73) Titulaire: AEROSPATIALE Société Nationale Industrielle, 75781 Paris Cédex 16 (FR)
(72) Inventeur: Azzara, Sauveur André, F-78500 Sartrouville (FR); Coutant, Hervé Georges Frédéric, F-78150 Le Chesnay (FR)
(74) Mandataire: Poulin, Gérard

(56) Documents cités:
- DE-A- 2 737 790
- FR-A- 999 306
- FR-A- 1 436 023
- FR-A- 1 504 703
- FR-A- 1 505 086
- FR-A- 2 065 051
- FR-A- 2 255 519
- FR-A- 2 637 536

## Description

L'invention concerne un procédé de formage de pièces profilées, de forme convexe non développable, en matériau composite.

Les matériaux composites sont utilisés de plus en plus fréquemment dans de nombreuses industries telles que l'aéronautique, l'automobile et le transport ferroviaire. La structure particulière de ces matériaux leur permet en effet de réaliser des pièces de formes très variées et de donner à ces pièces les caractéristiques mécaniques souhaitées, grâce à l'orientation judicieuse des fibres qu'ils contiennent.

Le procédé selon l'invention s'applique notamment à la fabrication des structures aéronautiques en matériau composite les plus délicates à réaliser. Ces structures sont des pièces de fortes courbures présentant des formes non développables, telles que des cadres de fuselage d'aéronefs, des raidisseurs d'encadrement de porte, des renforts d'appui disposés en bordure de trous, etc..

Pour réaliser de telles pièces, une première solution connue consiste à réaliser une plaque ébauche rectangulaire en drapant bord à bord et en nappes successives des bandes de fibres unidirectionnelles ou de tissu fibreux préimprégnées de résine. On découpe ensuite dans cette plaque une ébauche ayant la forme de la pièce à réaliser. Afin de donner à cette ébauche la section de la pièce, on la soumet à une ou plusieurs opérations de formage, au cours desquelles les parties non planes de la pièce sont mises en forme au moyen d'un outillage approprié.

Ce procédé connu présente de nombreux inconvénients. Ainsi, l'opération qui consiste à découper une ébauche ayant la forme de la pièce à réaliser dans une plaque ébauche de grande dimension a pour conséquence un taux de chute élevé, qui augmente avec les dimensions de la pièce.

Par ailleurs, ce procédé conduit à réaliser une pièce dans laquelle la répartition des fibres est totalement anisotrope. Cela complique singulièrement la tâche des bureaux d'étude, qui doivent prendre en compte, lors de la conception de la pièce, l'évolution des caractéristiques mécaniques qui découle de cette répartition des fibres. De plus, la répartition non homogène des fibres dans la bande ébauche ainsi que l'exécution d'opérations de formage sur une bande plane conduisent à des rétreints et à des allongements qui sont mal acceptés par les produits fibreux dans certaines zones, ce qui conduit à la formation de plis, etc.. Enfin, ce procédé est long et lourd à mettre en oeuvre.

Dans une variante de ce procédé de fabrication connu, au lieu de réaliser par drapage une plaque ébauche rectangulaire, puis de découper une ébauche dans cette plaque, on réalise directement par drapage une ébauche dont la forme est proche du contour de la pièce à réaliser.

Si cette technique permet de réduire considérablement le taux de chute, elle augmente de façon très importante le temps de drapage et elle ne résout en aucun cas les autres inconvénients précités.

Dans le document FR-A-2 635 484 publié le 23.02.90 on a décrit un autre procédé permettant de réaliser une ébauche plane ayant la forme de la pièce que l'on désire obtenir, à partir d'une bande ébauche rectiligne découpée dans une plaque ébauche plane de plus grande dimension. Ce procédé consiste à incurver dans son plan la bande ébauche, par exemple au moyen d'une machine à rouleaux coniques. On obtient ainsi une pièce dans laquelle la répartition des fibres est homogène sur toute sa longueur, avec un taux de chutes pratiquement nul.

Cependant, pour donner à la pièce sa section définitive, celle-ci doit être soumise ultérieurement à une ou plusieurs opérations de formage. Au cours de ces opérations, les parties intérieures au rayon de courbure de la pièce sont mises en forme par allongement apparent du développé des fibres, qui sont alors en tension. Au contraire, les parties extérieures au rayon de courbure, préalablement déformées par mise en tension lors de la courbure de la pièce au moyen de la machine à rouleaux coniques, sont mises en forme par rétreint apparent du développé des fibres extérieures au rayon de courbure, qui sont alors en compression.

Dans les pièces ainsi fabriquées, ces fibres en compression flambent à cause des efforts de frottement existant entre elles et la diminution du développé est absorbée par l'ondulation des fibres. Les fibres ondulées perdent alors toutes leurs caractéristiques de raideur et de résistance dans la pièce stratifiée, qui sollicite alors plus fortement la résine de liaison. Il en résulte des chutes de caractéristiques, très dommageables pour des pièces de structure.

Par ailleurs, ce procédé nécessite comme les précédents un nombre d'étapes relativement important, qui en augmente la durée et le coût.

L'invention a précisément pour objet un nouveau procédé de formage de pièces profilées en matériau composite permettant, comme le procédé décrit dans le document FR-A-88 10984, de réduire pratiquement à zéro le taux de chutes et de réaliser une pièce dans laquelle les fibres sont réparties de façon homogène et contrôlée, tout en limitant au strict minimum les allongements, afin d'éviter les rétreints lors du formage, ce procédé permettant en outre de réduire autant que possible les étapes ainsi que le temps de fabrication d'une telle pièce.

A cet effet, il est proposé un procédé de formage de pièces profilées convexes non développables en matériau composite, à partir d'une bande ébauche plane comprenant des fibres préimprégnées de résine et orientées selon au moins deux directions différentes non longitudinales, caractérisé en ce qu'il consiste :
- à placer la bande ébauche dans un outillage de formage, selon une surface cylindrique ayant une génératrice rectiligne et une courbe directrice convexe qui a la forme de la pièce à réaliser, cet outillage comprenant une matrice de formage présentant une surface profilée qui a une section complémentaire de la pièce à réaliser ; et
- à appliquer par pression la bande ébauche contre la surface profilée de la matrice de formage.

De préférence, on applique au moins en partie la bande ébauche contre la surface profilée au moyen d'une vessie gonflable que l'on place de l'autre côté de la bande ébauche, par rapport à la surface profilée, en face d'au moins une partie à déformer de cette bande.

Dans ce cas, on peut appliquer la bande ébauche contre la surface profilée soit en gonflant la vessie gonflable, soit en déformant la vessie, après l'avoir gonflée, au moyen d'un organe mobile de l'outillage de formage.

Afin de permettre à la bande ébauche de subir les déformations sans se dissocier au cours du formage, cette bande est de préférence compactée par mise sous dépression ou par roulage entre des rouleaux presseurs avant d'être placée dans l'outillage de formage. Cette action mécanique, associée à la pégosité de la bande ébauche, crée des liaisons cohésives qui assurent la bonne tenue de cette bande au cours du formage.

Dans le cas particulier où la pièce à réaliser est un cadre fermé, on raccorde entre elles les deux extrémités de la bande ébauche au moyen d'au moins une couture, de préférence en zigzag, avant de mettre en place cette bande dans l'outillage de formage.

La bande ébauche comprend généralement au moins une partie à ne pas déformer, qui correspond dans la majorité des cas à la partie intérieure de la pièce à réaliser. Afin d'isoler cette partie par rapport au reste de la pièce, on peut soit la maintenir par serrage mécanique dans l'outillage de formage, lors de l'application de la bande ébauche contre la surface profilée, soit réaliser au moins une couture longitudinale à la limite de cette partie à ne pas déformer, soit enfin ajouter à la bande ébauche, dans cette partie, au moins une nappe supplémentaire de fibres orientées longitudinalement par rapport à cette bande ébauche. La couture ou la nappe supplémentaire sont alors mises en place avant que la bande ébauche ne soit placée dans l'outillage de formage.

Différents exemples de mise en oeuvre du procédé de formage selon l'invention vont à présent être décrits, de façon non limitative, en se référant aux dessins annexés, dans lesquels:
- la figure 1 représente de façon schématique une bande ébauche plane apte à être mise en forme à l'aide du procédé selon l'invention ;
- la figure 1a montre que les fibres de deux nappes successives de la bande ébauche peuvent prendre des orientations croisées différentes ;
- les figures 2 et 3 montrent en perspective les formes respectives prises par cette bande ébauche lorsqu'elle est placée dans l'outillage de formage, dans le cas où la pièce à fabriquer est un cadre ouvert et dans le cas où il s'agit d'un cadre fermé ;
- les figures 4a à 4c sont des vues en coupe illustrant schématiquement des phases successives d'une première étape de la mise en oeuvre d'un outillage de formage conçu de façon à donner à la pièce finie une section en forme de U ;
- les figures 5a à 5c sont des vues en coupe comparables aux figures 4a à 4c, illustrant une variante de réalisation de la première étape ;
- les figures 6a à 6c sont des vues comparables aux figures 4a à 4c illustrant une deuxième et dernière étape de formage d'une pièce profilée à section en forme de U ;
- les figures 7 et 8 montrent en perspective l'allure de la pièce ainsi obtenue, respectivement dans le cas d'un cadre ouvert et dans le cas d'un cadre fermé ;
- la figure 9 illustre schématiquement le formage d'une pièce à section en forme d'Ω, dont la concavité est tournée vers l'extérieur, à l'aide du procédé selon l'invention ;
- la figure 10 est une vue en perspective qui illustre de façon schématique un cadre fermé obtenu avec l'outillage de formage de la figure 9 ;
- la figure 11 est une vue comparable à la figure 9, illustrant le formage d'une pièce à section en forme d' Ω, dont la concavité est tournée vers l'intérieur ; et
- la figure 12 est une vue en perspective représentant un cadre fermé obtenu avec l'outillage de la figure 11.

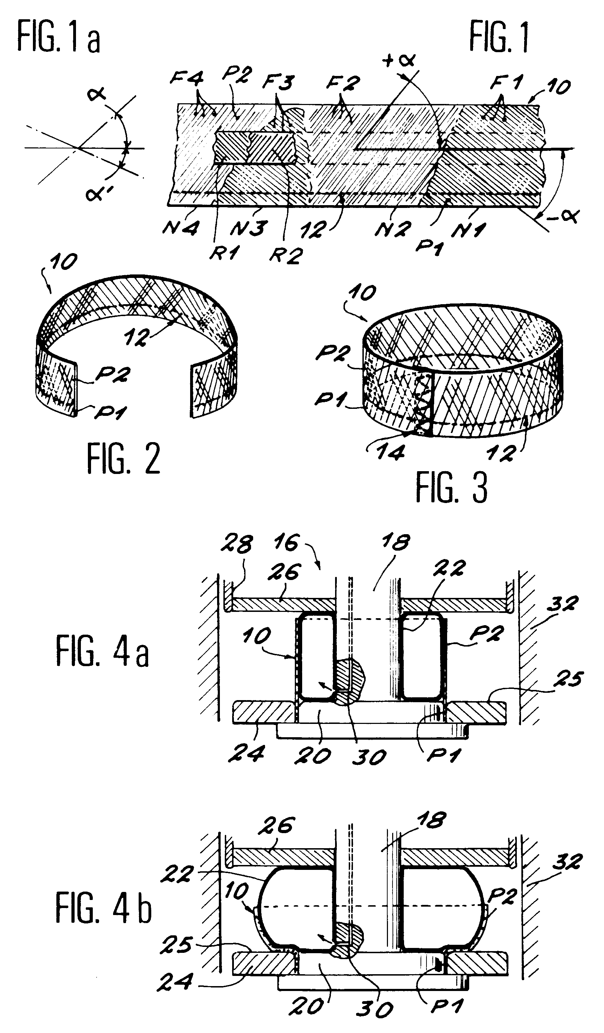

Comme l'illustre schématiquement la figure 1, la réalisation conformément à l'invention d'une pièce profilée, de forme convexe et non développable, commence par la fabrication d'une bande ébauche plane 10, de forme rectangulaire. Cette bande ébauche 10 peut être réalisée directement aux dimensions souhaitées ou obtenue par découpe à partir d'une plaque ébauche de plus grande dimension. Dans l'un et l'autre cas, il n'existe pratiquement pas de chutes.

D'une manière traditionnelle, la bande ou la plaque ébauche est obtenue par drapage, en superposant un certain nombre de nappes N1, N2, N3, N4, et de renforts internappes locaux R1, R2, etc. en zone déformable, présentant une structure croisée formés de fibres non tissées F1, F2, F3, F4, etc., disposées dans chaque nappe selon une direction déterminée, la direction étant différente d'une nappe à l'autre. Comme l'illustre la figure 1, les fibres telles que F1 et F2, ou F3 et F4 de deux nappes successives N1, N2, ou N3, N4 sont de préférence orientées d'un même angle α non nul, mais en sens opposé, par rapport à la direction longitudinale de la bande ébauche 10. Il est également possible de donner un angle d'orientation différent, par exemple α et α′ (figure 1a), mais en sens opposé, d'une nappe à l'autre de manière à obtenir un croisement asymétrique des fibres. La valeur de cet angle α, qui doit impérativement ne pas être nulle, est déterminée en fonction des caractéristiques mécaniques de la pièce que l'on désire fabriquer. Ces caractéristiques déterminent également le nombre de nappes constituant la bande ébauche 10 et la nature du matériau constituant les fibres F1, F2, etc., ces fibres étant habituellement de même nature. A titre d'exemple nullement limitatif, l'angle α peut être d'environ 45° et les fibres F1, F2, etc., des fibres de carbone, de verre, de kevlar, etc..

Les fibres constituant les différentes nappes de la bande ébauche 10 sont préimprégnées de résine, cette résine étant habituellement une résine polymérisable. Lorsque le drapage est réalisé, la résine est à un stade donné de polymérisation qui laisse à la bande ébauche une pégosité suffisante pour permettre son drapage et autoriser sa manipulation.

Dans une variante de réalisation non représentée, les nappes de fibres non tissées sont remplacées par des tissus de fibres préimprégnées orientés selon les directions plus ou moins α, comme dans l'exemple décrit précédemment.

Afin qu'elle puisse subir les déformations liées au formage sans se dissocier, la bande ébauche 10 ainsi obtenue est compactée mécaniquement par l'application d'une pression sur ses faces opposées. Ce compactage peut notamment être obtenu par une mise sous dépression de la bande ébauche ou par un roulage de cette dernière entre des rouleaux presseurs. L'effet mécanique de compression, ajouté à la pégosité du produit crée des liaisons cohésives qui contribuent à la bonne tenue de la bande ébauche en cours de formage.

Comme on l'a représenté en 12 sur la figure 1, une ou plusieurs lignes de couture longitudinales peuvent en outre être réalisées sur la bande ébauche 10, en des emplacements prédéterminés qui permettent d'isoler localement une partie P1 de la bande qui ne doit pas être déformée durant le formage, du reste P2 de la bande. Cette zone peut être renforcée également par des bandes de fibres unidirectionnelles disposées longitudinalement par rapport à la bande avant la séquence de formage.

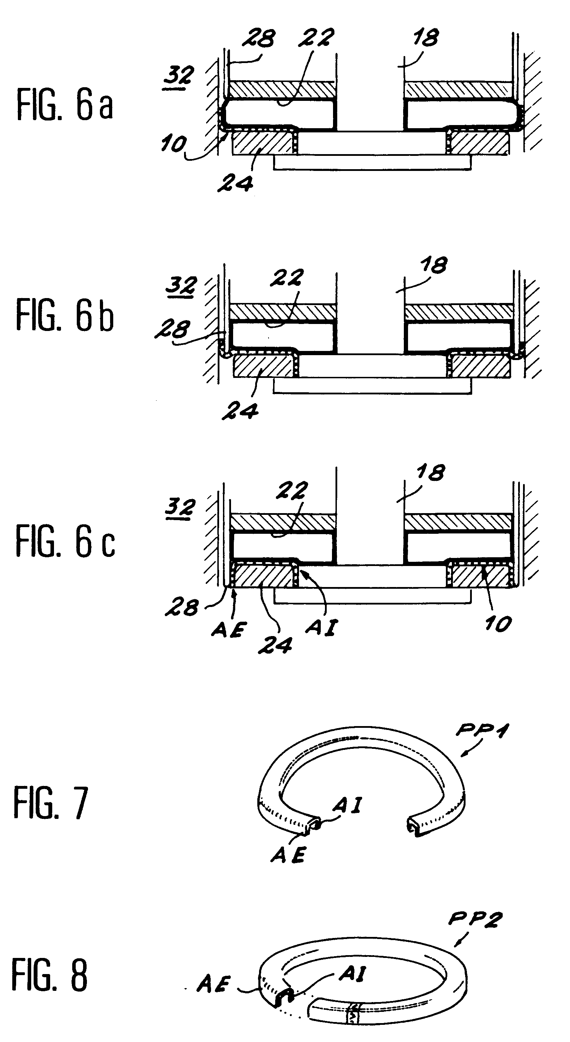

Dans l'exemple représenté, qui correspond à la fabrication d'une pièce à section en forme de U, la partie isolée P1 se trouve à la partie basse sur la figure 1, en dessous de la ligne de couture 12, et elle correspond lorsque la pièce est terminée à un aile intérieure AI (figures 7 et 8) de la pièce. Tout le reste P2 de la bande 10 subira lors du formage une déformation conduisant à une augmentation apparente de son diamètre, l'allongement étant cependant limité au strict minimum comme on le verra par la suite.

La ligne de couture 12 est réalisée avec du fil de même nature que les fibres F1, F2, etc. formant la bande ébauche 10.

Dans une variante de réalisation non représentée, l'isolation des parties P1 de la bande ébauche 10 à ne pas déformer est obtenue, non pas en réalisant une ou plusieurs lignes de couture comme l'illustre la figure 1, mais en plaçant sur la partie correspondante de la bande ébauche une ou plusieurs bandes de fibres orientées longitudinalement par rapport à la bande ébauche. Les fibres de ces nappes supplémentaires, qui sont de même nature que les fibres F1, F2, etc., se comportent comme une frette et empêchent la déformation de la partie correspondante P1 lors de l'opération ultérieure de formage.

Le même résultat peut aussi être obtenu sans ligne de couture et sans bande de fibres longitudinales supplémentaire en réalisant un bridage mécanique de la partie correspondante de la bande ébauche lorsque celle-ci est placée dans l'outillage de formage. Dans certains cas, cette dernière solution peut être combinée à l'une des solutions précédentes.

Comme l'illustre très schématiquement la figure 2, lorsque la bande ébauche 10 est utilisée pour la fabrication d'une pièce non fermée, cette bande est placée directement dans un outillage de formage approprié, selon une surface cylindrique ayant une génératrice rectiligne, ainsi qu'une courbe directrice convexe qui a la forme de la pièce à réaliser. La forme de cette courbe directrice convexe peut donc être quelconque et comprendre notamment des parties rectilignes ainsi que des parties incurvées de rayons variables. Le plus souvent, la génératrice de la surface cylindrique est alors perpendiculaire à la courbe directrice, comme l'illustre la figure 2.

Dans le cas illustré sur la figure 3 où la pièce à réaliser est une pièce fermée telle qu'un cadre fermé de fuselage d'aéronef, les deux extrémités de la bande ébauche 10 sont raccordées entre elles au moyen d'une ou plusieurs coutures 14 réalisées par exemple en zigzag. Ces coutures sont faites avec des fils compatibles avec le procédé de polymérisation de la pièce finale.

Comme dans le cas d'un cadre non fermé, la bande ébauche est ensuite placée dans un outillage de formage adapté, selon une surface cylindrique ayant une génératrice rectiligne et une courbe directrice convexe qui a la forme de la pièce à réaliser.

Les figures 4a à 4c illustrent une première étape de la mise en oeuvre d'un outillage de formage adapté à la fabrication d'une pièce présentant un profil en forme de U.

L'outillage de formage, désigné de façon générale par la référence 16, comprend une pièce d'appui intérieure 18, indéformable, dont la surface extérieure est une surface cylindrique ayant une courbe directrice parallèle à la surface intérieure de la pièce à réaliser.

Autour de la partie basse de la pièce d'appui intérieure 18, sur une hauteur égale à la hauteur de la partie P1 de la bande ébauche 10, est placée une cale d'épaisseur 20. Une vessie gonflable 22, initialement dégonflée, est placée au-dessus de la cale 20 autour de la pièce d'appui 18. L'épaisseur de la cale 20 correspond à l'épaisseur de la vessie 22 à l'état dégonglé. La bande ébauche 10 est placée de la manière décrite précédemment autour de la cale d'épaisseur 20 et de la vessie gonflable 22.

Autour de la bande ébauche 10 et au niveau de la cale d'épaisseur 20 est placée une matrice de formage 24 qui est de préférence pressée contre la cale d'épaisseur 20 afin de maintenir la partie P1 lors du formage. La face supérieure de la matrice 24, ainsi que ses bords périphériques intérieur et extérieur définissent une surface profilée 25, complémentaire de l'une des faces de la pièce profilée à réaliser. Plus précisément, cette surface profilée a une section convexe en forme de U complémentaire de la face intérieure concave du U formé en section par la pièce à réaliser.

L'outillage de formage 16 illustré sur les figures 4a à 4c comprend de plus une plaque horizontale fixe 26 placée autour de la pièce d'appui intérieure 18, immédiatement au-dessus des bords supérieurs de la bande ébauche 10 et de la vessie gonflable 22.

Dans la pratique, la bande ébauche 10 est d'abord mise en place à l'intérieur de la matrice de formage 24, puis la vessie 22 est mise en place, ainsi que les pièces 18, 20 et 26 qui bloquent cette vessie sur trois côtés.

L'outillage de formage comprend également une virole mobile 28 apte à se déplacer verticalement vers le bas et escamotée initialement au-dessus de la face inférieure de la plaque 26. Cette virole 28 est située très légèrement au-delà du bord périphérique extérieur de la matrice de formage 24 et peut soit avoir une forme complémentaire de cette dernière, soit être apte à se déplacer le long de son bord extérieur.

Bien entendu, certains des éléments de l'outillage de formage 16 sont réalisés en plusieurs pièces afin de permettre le montage et le démontage de cet outillage, la mise en place de la bande ébauche et l'enlèvement de la pièce formée.

Dans la première étape illustrée successivement par les figures 4a à 4c, le formage de la pièce est obtenu par gonflage de la vessie 22. A cet effet, cette dernière est reliée à une source d'air comprimé (non représentée) par une canalisation 30.

Lorsqu'on commence à gonfler la vessie 22 (figure 4b), celle-ci est bloquée sur trois côtés par la pièce d'appui intérieure 18, la cale d'épaisseur 20 et la plaque supérieure 26. Par conséquent, le gonflage de la vessie se traduit par une déformation de cette dernière vers l'extérieur, qui a pour effet de plaquer progressivement la partie P2 de la bande ébauche 10 située au-dessus de la partie P1 contre la face supérieure plane de la matrice de formage 24. La bande ébauche 10 est amenée progressivement au profil désiré par allongement apparent, les fibres prenant alors une trajectoire identique à celle obtenue en courbant une bande ébauche dans son plan à l'aide de rouleaux coniques, comme cela est décrit dans le document FR-A-88 10984.

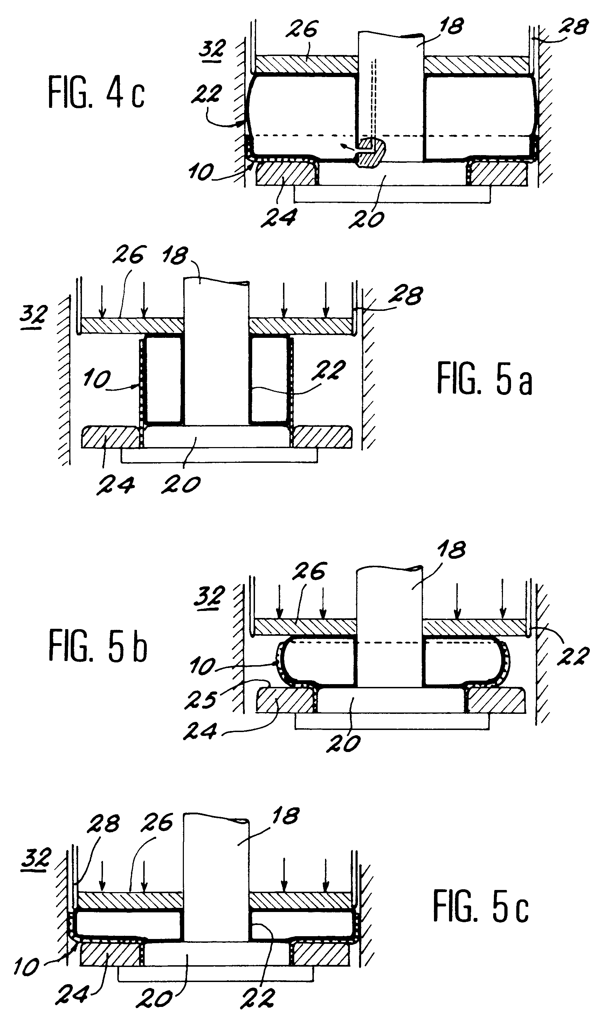

En particulier, il est intéressant d'observer qu'à la fin du gonflement de la vessie 22 (figure 4c), la partie supérieure de la bande ébauche 10 destinée à former l'aile extérieure AE (figures 7 et 8) de la pièce profilée se trouve repliée vers le haut et plaquée contre la face intérieure cylindrique d'une pièce d'appui extérieure 32, de telle sorte que l'allongement de cette partie n'excède l'allongement final de l'aile extérieure que de l'épaisseur de la virole 28.

Les figures 5a à 5c illustrent une variante de mise en oeuvre de la première étape du procédé de formage selon l'invention. Dans cette variante, l'outillage de formage comprend également une pièce d'appui intérieure 18, une cale d'épaisseur 20, une vessie gonflable 22, une matrice de forme 24, une plaque supérieure 26, une virole mobile 28 et une pièce d'appui extérieure 32. Cependant, la vessie 22 est gonflée avant le début du formage et la plaque 26, au lieu d'être fixe, est mobile de façon à pouvoir se déplacer vers le bas en se rapprochant de la matrice de formage 24.

Le formage s'effectue alors non plus par gonflage de la vessie 22 mais par déplacement vers le bas de la plaque 26, comme l'illustrent successivement les figures 5a à 5c. A la fin de cette première étape, la partie centrale de la bande 10 est plaquée sur la face supérieure de la matrice de formage 24 et le bord supérieur de la bande 10 est orienté vers le haut et plaqué contre la surface intérieure de la pièce d'appui 32 (figure 5c).

Lorsque la première étape du formage est terminée, la bande ébauche 10 présente donc une section approximativement en forme de Z, quel que soit le moyen utilisé pour parvenir à cette forme. Pour obtenir une pièce ayant une section en forme de U, il est donc nécessaire, au cours d'une seconde étape, de retourner vers le bas en considérant les figures 4c et 5c le bord supérieur de la bande ébauche 10.

Dans le mode de réalisation illustré sur les figures 6a à 6c, cette opération est réalisée en déplaçant vers le bas la virole mobile 28, après avoir dégonflé au moins partiellement la vessie 22. Comme le montrent les figures, la virole mobile 28 passe alors à l'intérieur de la partie supérieure de la bande ébauche 10 qui est plaquée contre la pièce d'appui extérieure 32, de sorte qu'il vient en contact avec la bande ébauche dans le creux formé entre cette partie supérieure et la partie centrale plaquée sur la face supérieure de la matrice de formage 24. On réalise ainsi progressivement le retournement vers le bas de la partie supérieure de la bande, sans que le développé apparent n'augmente jamais au-delà des dimensions atteintes par cette partie à la fin de la première étape.

Lorsque la deuxième étape est terminée (figure 6c), la partie supérieure de la bande ébauche 10 est donc plaquée vers le bas contre le bord extérieur de la matrice de formage 24, pour former l'aile extérieure AE de la pièce à réaliser.

Même au niveau de l'aile extérieure AE, les fibres ne subissent donc qu'un rétreint très limité.

Le procédé selon l'invention fait ainsi disparaître les ondulations qui se produisent avec les procédés existants et permet d'accéder au formage automatisé d'une pièce profilée de forme complexe, tout en bénéficiant des meilleures propriétés mécaniques possibles puisque les déformations subies par les fibres sont aussi limitées que possible.

Les figures 7 et 8 représentent l'allure des pièces profilées PP1 et PP2 obtenues en appliquant le procédé de formage de l'invention, respectivement dans le cas d'un cadre ouvert et d'un cadre fermé, ces pièces ayant dans les deux cas une section en forme de U comportant une aile intérieure AI et une aile extérieure AE obtenues de la manière décrite précédemment.

Afin de rigidifier les pièces obtenues, celles-ci sont placées de façon habituelle dans une étuve, à l'intérieur de laquelle la polymérisation de la résine est terminée.

On comprend aisément que le procédé de formage de l'invention n'est pas limité à la fabrication de pièces présentant une section en forme de U. Ainsi et uniquement à titre d'exemple, la section des pièces obtenues peut aussi avoir la forme d'un L, d'un Z, d'un I, d'un Ω, etc..

La fabrication d'une pièce à section en forme de L est réalisée dans un outillage de formage comparable à celui qui est illustré sur les figures 4a à 4c et 5a à 5c, à l'exception de la virole mobile 28 et de la pièce d'appui extérieure 32, qui peuvent être supprimés. Le formage se limite alors au placage de la partie supérieure P2 de la bande ébauche 10 sur la face supérieure de la matrice de formage 24, de l'une ou l'autre des manières décrites en se référant aux figures 4a à 4c et 5a à 5c. Lorsque cette étape de formage est terminée, la totalité de la partie supérieure de la bande ébauche est rabattue sur la face supérieure de la matrice de formage 24, de sorte que la pièce présente bien la section en forme de L souhaitée.

Dans le cas où la section de la pièce que l'on désire fabriquer a la forme d'un Z, l'outillage de formage et sa mise en oeuvre sont identiques à ceux qui viennent d'être décrits pour la fabrication de pièces à section en forme de L, en y ajoutant la pièce d'appui extérieure 32. Cependant, la largeur de la partie de la bande ébauche 10 située au-dessus de la matrice de formage 24 est plus grande que la largeur de la face supérieure de cette dernière. L'opération de formage obtenue soit par gonflage de la vessie 22, soit par déplacement de la plaque supérieure 26, a donc pour effet de plaquer l'extrémité supérieure de la bande ébauche contre la face intérieure de la pièce d'appui extérieure, ce qui donne bien à la pièce la section en Z désirée.

Pour obtenir une pièce ayant une section en forme de I, on fabrique deux pièces symétriques à section en forme de U, que l'on assemble ensuite dos à dos.

Bien entendu, ces formes générales présentées en section par la pièce obtenue conformément au procédé selon l'invention sont seulement données à titre indicatif, la face supérieure de la matrice de formage 24 pouvant notamment ne pas être parfaitement plane lorsque l'âme de la pièce profilée à réaliser doit présenter une forme particulière en section.

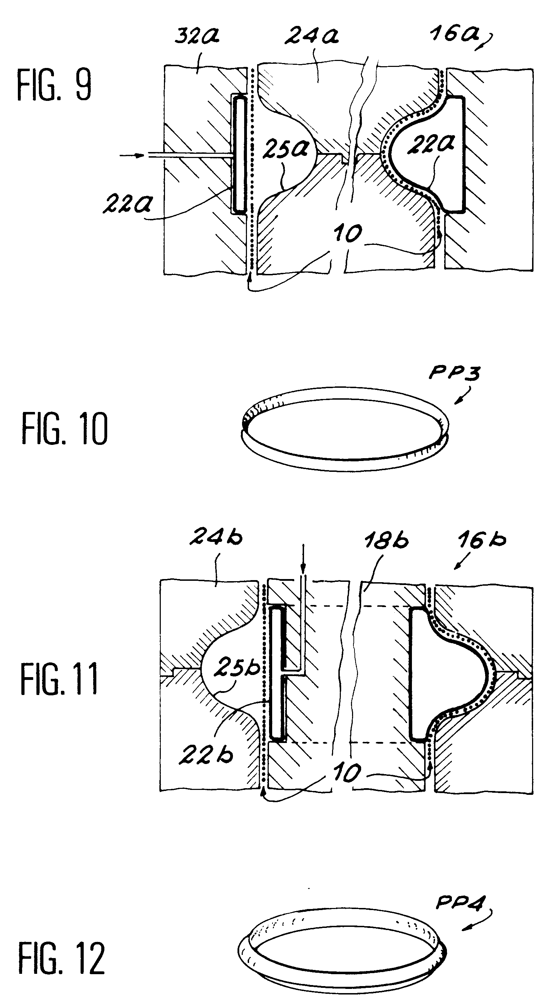

Sur la figure 9, on a représenté très schématiquement un outillage de formage 16a permettant de réaliser conformément à l'invention des pièces profilées convexes non développables en matériau composite ayant en section la forme d'un Ω dont la concavité est tournée vers l'extérieur. Les moitiés gauche et droite de la figure 9 représentent l'outillage 16a respectivement avant et après sa mise en oeuvre.

Cet outillage de formage 16a comprend une matrice de formage intérieure 24a qui présente en section une surface extérieure profilée 25a dont la forme est complémentaire de la forme de la pièce à obtenir. Autour de la matrice 24a est placée initialement la bande ébauche 10, dans la position décrite précédemment, c'est-à-dire selon une surface cylindrique ayant une génératrice rectiligne et une courbe directrice convexe qui a la forme de la pièce à réaliser. Autour de la bande ébauche 10 est placée une vessie gonflable 22a initialement dégonflée, puis une pièce d'appui extérieure 32a dont la surface intérieure est une surface cylindrique complémentaire de la surface formée initialement par la bande ébauche 10, à l'épaisseur de la vessie 22a à l'état dégonflé près.

Dans ce cas, le formage est obtenu en gonflant la vessie 22a, de façon à plaquer la bande ébauche contre la surface extérieure profilée de la matrice de formage 24a, comme l'illustre la moitié droite de la figure 9.

Pour réaliser une pièce présentant une telle section, on maintient soit par couture soit au moyen d'une bande de fibres longitudinale, chacun des bords latéraux de la bande 10 avant de la placer dans l'outillage de formage. En revanche, l'un au moins de ces bords latéraux est laissé libre à l'intérieur de l'outillage de formage, afin de permettre aux fibres de se déformer pour venir se plaquer contre la surface profilée de la matrice de formage 24a.

A la fin du formage, on obtient une pièce profilée qui peut notamment prendre la forme d'un cadre ouvert ou d'un cadre fermé tel que celui qui est représenté en PP3 sur la figure 10. Ce cadre a en section la forme d'un Ω dont la concavité est tournée vers l'extérieur.

Pour fabriquer une pièce profilée ayant en section la forme d'un Ω dont la concavité est tournée vers l'intérieur, on utilise un outillage de formage 16b (figure 11) comparable à celui qui vient d'être décrit en se référant à la figure 9 mais dans lequel les formes présentées par les surfaces en vis-à-vis des pièces 24a et 32a sont inversées.

De façon plus précise, on voit sur la figure 11 que l'outillage 16b comprend une pièce d'appui intérieure 18b qui a une surface extérieure cylindrique présentant une génératrice rectiligne et une courbe directrice convexe qui correspond, à l'épaisseur de la vessie gonflable 22 près, à la courbe directrice convexe formée par la bande ébauche 10 lorsque celle-ci est placée dans l'outillage. L'outillage 16b comprend de plus une matrice de formage 24b dont la surface intérieure profilée 25b est complémentaire de la surface extérieure de la pièce à réaliser.

La fabrication de la pièce est par ailleurs identique à celle qui a été décrite précédemment en référence à la figure 9, c'est-à-dire que le formage est obtenu directement par gonflage de la vessie 22b placée entre la pièce d'appui 18b et la bande ébauche 10, comme l'illustre la moitié droite de la figure 11.

La figure 12 représente la pièce profilée PP4 obtenue à la fin du formage réalisé à l'aide de l'outillage 16b de la figure 11.

Bien entendu, pour la fabrication de pièces présentant des sections différentes, l'outillage de formage sera adapté à cette section sans sortir du cadre de l'invention.

Il est à noter également que si l'utilisation d'une ou plusieurs vessies gonflables constitue une solution particulièrement avantageuse pour mettre en oeuvre le procédé de formage de l'invention, cette solution ne doit pas être considérée comme limitative. En effet, le procédé de formage de l'invention repose essentiellement sur l'utilisation de l'aptitude de nappes fibreuses préimprégnées, formées de fibres croisées de préférence, mais non limitativement, à plus ou moins α, à se déformer lorsqu'elles sont soumises à des pressions perpendiculaires à leurs surfaces. Ces pressions, permettant de mettre en forme la bande ébauche placée initialement selon une surface cylindrique, peuvent donc être obtenues par tout moyen et notamment par roulage ou en exerçant une pression pneumatique directement sur la bande ébauche.

Comme on a déjà eu l'occasion de le mentionner, le procédé de formage selon l'invention permet d'obtenir de façon simple, rapide et éventuellement automatisée toutes pièces profilées convexes non développables en matériau composite en n'effectuant sur la bande ébauche initiale que les déformations strictement nécessaires au formage, contrairement aux procédés existants. Cela permet notamment de supprimer le flambage des fibres qui est à l'origine d'ondulations et conduit, dans les pièces stratifiées obtenues, à la perte de toutes les caractéristiques de raideur et de résistance des fibres.

On observera également que la mise en oeuvre du procédé selon l'invention peut être faite soit en continu, soit de façon discontinue et que l'outillage de formage peut inclure des moyens de chauffage afin notamment d'accroître la cadence de production.

## Revendications

1. Procédé de formage de pièces profilées convexes non développables en matériau composite, à partir d'une bande ébauche plane (10) comprenant des fibres préimprégnées de résine et orientées selon au moins deux directions différentes non longitudinales, caractérisé en ce qu'il consiste :
- à placer la bande ébauche (10) dans un outillage de formage (16, 16a, 16b), selon une surface cylindrique ayant une génératrice rectiligne et une courbe directrice convexe qui a la forme de la pièce à réaliser, cet outillage comprenant une matrice de formage (24, 24a, 24b) présentant une surface profilée (25, 25a, 25b) qui a une section complémentaire de la pièce à réaliser ; et
- à appliquer par pression la bande ébauche (10) contre la surface profilée de la matrice de formage.

2. Procédé selon la revendication 1, caractérisé par le fait qu'on applique au moins en partie la bande ébauche (10) contre la surface profilée au moyen d'une vessie gonflable (22, 22a, 22b) que l'on place de l'autre côté de la bande ébauche, par rapport à la surface profilée, en face d'au moins une partie (P2) à déformer de cette bande.

3. Procédé selon la revendication 2, caractérisé par le fait qu'on applique la bande ébauche (10) contre la surface profilée en gonflant la vessie gonflable (22, 22a, 22b).

4. Procédé selon la revendication 2, caractérisé par le fait qu'on applique la bande ébauche (10) contre la surface profilée en déformant la vessie (22), après l'avoir gonflée, au moyen d'un organe mobile (26) de l'outillage de formage.

5. Procédé selon l'une quelconque des revendications 2 à 4, caractérisé par le fait qu'après avoir appliqué une partie centrale de la bande ébauche (10) contre la surface profilée (25) au moyen de la vessie gonflable (22), on forme une aile extérieure (AE) de la pièce par retournement de cette aile contre la surface profilée au moyen d'une virole mobile (28) de l'outillage de formage, cette virole se déplaçant sensiblement parallèlement à ladite génératrice rectiligne, et la matière à former glissant le long de cette virole mobile.

6. Procédé selon l'une quelconque des revendications précédentes, caractérisé par le fait qu'avant de placer la bande ébauche (10) dans l'outillage de formage (16, 16a, 16b), on réalise un compactage préalable de cette bande.

7. Procédé selon l'une quelconque des revendications précédentes, caractérisé par le fait que, la pièce à réaliser étant un cadre fermé, on raccorde entre elles les deux extrémités de la bande ébauche (10) au moyen d'au moins une couture (14), avant de mettre en place ladite bande dans l'outillage de formage (16, 16a, 16b).

8. Procédé selon l'une quelconque des revendications précédentes, caractérisé par le fait que, la bande ébauche (10) comprenant au moins une partie (P1) à ne pas déformer, on maintient cette partie par serrage mécanique dans l'outillage de formage (16, 16a, 16b), lors de l'application de la bande ébauche contre la surface profilée.

9. Procédé selon l'une quelconque des revendications 1 à 7, caractérisé par le fait que, la bande ébauche (10) comprenant au moins une partie (P1) à ne pas déformer, on réalise sur cette partie au moins une couture longitudinale (12) avant de mettre en place la bande ébauche dans l'outillage de formage.

10. Procédé selon l'une quelconque des revendications 1 à 7, caractérisé par le fait que, la bande ébauche (10) comprenant au moins une partie (P1) à ne pas déformer, on renforce cette partie au moyen d'au moins une nappe de fibres orientées longitudinalement par rapport à la bande ébauche avant de mettre en place cette dernière dans l'outillage de formage.

11. Procédé selon l'une quelconque des revendications 8 à 10, caractérisé par le fait que ladite partie de la bande ébauche à ne pas déformer correspond à une aile intérieure (AI) de la pièce à réaliser, la bande ébauche étant appliquée vers l'extérieur contre la surface profilée (25) de la matrice de formage.

## Claims

1. Method for forming non-extractable formed pieces made of composite material from a plain preform strip (10) including fibres preimpregnated with resin and orientated along at least two different non-longitudinal directions, characterized in that it comprises:
- placing the preform strip (10) in a forming tool (16, 16a, 16b) along a cylindrical surface having one rectilinear generator and one convex directrix curve which has the shape of the piece to be produced, this tool including a forming die (24, 24a, 24b) having a formed surface (25, 25a, 25b) which has a section complementary to the piece to be produced, and
- applying by pressure the preform strip (10) against the formed surface of the forming die.

2. Method according to claim 1, characterized in that at least part of the preform strip (10) is applied against the formed surface with the aid of an inflatable bladder (22, 22a, 22b) placed on the other side of the preform strip with respect to the formed surface opposite at least one portion (P2) of this strip to be deformed.

3. Method according to claim 2, characterized in that the preform strip (10) is applied against the formed surface by inflating the inflatable bladder (22, 22a, 22b).

4. Method according to claim 2, characterized in that the preform strip (10) is applied against the formed surface by deflating the firstly inflated bladder (22) with the aid of a mobile member (26) of the forming tool.

5. Method according to any one of the claims 2 to 4, characterized in that, after having applied one central portion of the preform strip (10) against the formed surface (25) with the aid of the inflatable bladder (22), one outer wing (AE) of the piece is formed by returning this wing against the formed surface with the aid of a mobile hoop (28) of the forming tool, this hoop moving roughly parallel to said rectilinear generator, the material to be formed sliding along this mobile hoop.

6. Method according to any one of the preceding claims, characterized in that, before placing the preform strip (10) in the forming tool (16, 16a, 16b), this strip is firstly compacted.

7. Method according to any one of the preceding claims, characterized in that, in the case where the piece to be produced is a closed frame, the two extremities of the preform strip (10) are interconnected with the aid of at least one seam (14) before placing said strip in the forming tool (16, 16a, 16b).

8. Method according to any one of the preceding claims, characterized in that in the case where the preform strip (10) includes at least one portion (P1) not to be deformed, this portion is maintained by mechanical clamping in the forming tool (16, 16a, 16b) when applying the preform strip against the formed surface.

9. Method according to any one of the claims 1 to 7, characterized in that in the case where the preform strip (10) includes at least one portion (P1) not to be deformed, at least one longitudinal seam (12) is produced on this portion before placing the preform strip in the forming tool.

10. Method according to any one of the claims 1 to 7, characterized in that in the case where the preform strip (10) includes at least one portion (P1) not to be deformed, this portion is reinforced with the aid of at least one lap of fibres orientated longitudinally with respect to the preform strip before placing the latter in the forming tool.

11. Method according to any one of the claims 1 to 8, characterized in that said portion of the preform strip pot to be deformed corresponds to one internal wing (AI) of the piece to be produced, the preform strip being applied outwardly against the formed surface (25) of the forming die.

## Patentansprüche

1. Formgebungsverfahren für konvexe, nicht entfaltbare Profilteile aus Verbundwerkstoff ausgehend von einer flachen, vorgefertigten Bahn (10), die aus mit Harz vorimprägnierten Fasern besteht, welche in mindestens zwei verschiedene, nicht längs verlaufende Richtungen ausgerichtet sind, dadurch gekennzeichnet, daß:
- die vorgefertigte Bahn in eine Formgebungsvorrichtung (16, 16a, 16b) entsprechend einer zylindrischen Oberfläche eingelegt wird, welche eine geradlinige Mantellinie und eine konvexe Leitkurve besitzt, die die Form des herzustellenden Werkstückes aufweist, wobei diese Vorrichtung ein Formgesenk (24, 24a, 24b) besitzt, die eine Profilfläche (25, 25a, 25b) aufweist, welche einen Komplementärquerschnitt des herzustellenden Werkstückes hat; und
- die Profilfläche des Formgesenks gegen die vorgefertigte Bahn (10) gepreßt wird.

2. Verfahren nach Anspruch 1, dadurch gekennzeichnet, daß zumindest teilweise die vorgefertigte Bahn (10) gegen die Profilfläche mit Hilfe eines aufblasbaren Balges (22, 22a, 22b) gedrückt wird, welcher auf der anderen Seite der vorgefertigten Bahn und in Bezug auf die Profilflache gegenüber mindestens einem zu verformenden Teil (P2) dieser Bahn angebracht ist.

3. Verfahren nach Anspruch 2, dadurch gekennzeichnet, daß die vorgefertigte Bahn (10) durch Aufblasen des aufblasbaren Balges (22, 22a, 22b) gegen die Profilfläche gepreßt wird.

4. Verfahren nach Anspruch 2, dadurch gekennzeichnet, daß die vorgefertigte Bahn (10) nach dem Aufblasen des Balges (22) durch Verformung desselben mit Hilfe eines beweglichen Teils (26) der Formgebungsvorrichtung gegen die Profiloberfläche gepreßt wird.

5. Verfahren nach einem der Ansprüche 2 bis 4, dadurch gekennzeichnet daß man, nachdem ein mittlerer Teil der vorgefertigten Bahn (10) gegen die Profiloberfläche (25) mit Hilfe des aufblasbaren Balges (22) gepreßt wurde, einen äußeren Rand des Werkstückes durch Umkanten dieses Randes an der Profilfläche mit Hilfe eines beweglichen Ringes (28) der Formgebungsvorrichtung formt, wobei sich dieser Ring fast genau parallel in Bezug auf die genannte geradlinige Mantellinie verschiebt und das zu verformende Material entlang dieses beweglichen Ringes gleitet.

6. Verfahren nach einem der voranstehenden Ansprüche, dadurch gekennzeichnet, daß, bevor die vorgefertigte Bahn (10) in die Formgebungsvorrichtung (16, 16a, 16b) eingelegt wird, diese Bahn vorgepreßt wird.

7. Verfahren nach einem der voranstehenden Ansprüche, dadurch gekennzeichnet, daß man, ausgehend davon, daß das herzustellende Werkstück ein geschlossener Rahmen ist, zwischen ihnen die beiden Enden der vorgefertigten Bahn (10) mit Hilfe von mindestens einer Naht (14) verbindet, bevor die genannte Bahn in die Formgebungsvorrichtung (16, 16a, 16b) eingelegt wird.

8. Verfahren nach einem der voranstehenden Ansprüche, dadurch gekennzeichnet, daß die vorgefertigte Bahn (10) mindestens einen nicht zu verformenden Abschnitt (P1) besitzt, der durch mechanisches Festklemmen in der Formgebungsvorrichtung (16, 16a, 16b) gehalten wird, während die vorgefertigte Bahn gegen die Profilfläche gepreßt wird.

9. Verfahren nach einem der Ansprüche 1 bis 7, dadurch gekennzeichnet, daß vorgefertigte Bahn (10) mindestens einen nicht zu verformenden Abschnitt (P1) besitzt, an dem mindestens eine Längsnaht (12) angebracht wird, bevor die vorgefertigte Bahn in die Formgebungsvorrichtung eingelegt wird.

10. Verfahren nach einem der Ansprüche 1 bis 7, dadurch gekennzeichnet, daß die vorgefertigte Bahn (10) mindestens einen nicht zu verformenden Abschnitt (P1) besitzt, welcher mit Hilfe von mindestens einer Lage aus in Bezug auf die vorgefertigte Bahn längs ausgerichteten Fasern verstärkt wird, bevor die vorgefertigte Bahn in die Formgebungsvorrichtung eingelegt wird.

11. Verfahren nach einem der Ansprüche 8 bis 10, dadurch gekennzeichnet, daß der genannte, nicht zu verformende Abschnitt der vorgefertigten Bahn einem inneren Rand (AI) des herzustellenden Werkstückes entspricht, wobei die vorgefertigte Bahn nach außen gegen die Profilfläche (25) des Formgesenkes gepreßt wird.
